# EUROPEAN PATENT APPLICATION

(11) **EP 2 431 236 A1**
(43) Date of publication of application: **21.03.2012**
(21) Application number: 11169491.5
(22) Date of filing: 10.06.2011
(51) Int. Cl.: B60R 19/50

(54) **Bumper for vehicles**

(30) Priority: 21.09.2010 IT TV20100043 U
(71) Applicant: Lago Accessori S.r.l., 35014 Fontaniva (PD) (IT)
(72) Inventor: Lago, Fabio, 35013 CITTADELLA PD (IT)
(74) Representative: Modiano, Micaela Nadia

(57) **Abstract**

A bumper for vehicles which is constituted by a hollow tubular frame, which can be closed laterally by means of adapted caps.

The hollow tubular frame has, in an upper region and longitudinally, an open cavity which defines a seat for wires.

This open cavity can be closed by means of a plurality of covers.

A support protrudes from one or more of these covers for a light and/or a registration plate and/or a tail-light.

## Description

The present invention relates to a bumper for vehicles.

Nowadays bumpers are known for industrial vehicles which are formed from sheet metal or alloys, so as to define a bar that has profiles which, in addition to the object of giving the bar a robust structure, include slightly recessed spaces to define seats where essential accessories, such as tail-lights, registration plates, indicator lights and the like are then mounted. Bumpers are also known which are formed by a process of extrusion of metal or light alloy: these bumpers have closed sections that provide, for the same weight, greater robustness.

The first solution exhibits a structural disadvantage, since in Italy there is a regulation (Directive 70/221/CEE and subsequent modification 2006/20/CE) that imposes a resistance threshold on bumpers which is such as to require the use of sheets of considerable thickness; this fact heavily penalises the product from the point of view of costs and sustainability.

We must also keep in mind that the weight of the bumper ends up burdening on every vehicle that mounts it, since it reduces the overall weight that can be loaded and it also increases the consumption of fuel.

The second known solution, while lending itself to providing a more robust bumper for the same weight, exhibits the problem of needing to be subjected to different machining operations for customization (drilling and cutting), for fixing the essential accessories, which include luminaires, which are powered by electricity.

This consideration reveals a further disadvantage of both types of solution described, which is the problem of managing the electrical wires that power the accessories which in turn are fixed to the bumper.

These are commonly fixed along the longitudinal extension of the bumper by using bands or clamps which in turn are fixed to the bumper with mechanical means.

It follows from this that the wiring and the connectors are in any case exposed to the elements and to potential physical damage owing to abrasion, ice, snow or simply impacts with bodies such as stones or other objects that a vehicle encounters in its travels on sealed and unsealed surfaces.

The aim of the present invention is therefore to solve the above mentioned technical problems, eliminating the drawbacks in the cited known art, by providing a bumper for vehicles which is simple to implement, has a low overall weight and is easy to position and wire for the various wires for powering lights and/or tail-lights.

Within this aim, an object of the invention is to make a bumper that meets the regulations in force regarding structural rigidity while maintaining a high overall lightness.

Another object is to provide a bumper that makes it possible to achieve the total integration of the functions of accommodating the accessories, accommodating and handling the wiring, and protecting both the accessories and the wiring.

Another object is to provide a bumper that has a great flexibility of configuration for the wiring and the positioning of the accessories according to the requirements of different markets, such configuration being obtainable in the absence of specific drilling or machining operations.

Another object is to provide a bumper that can be customised according to specific requirements.

Another object is to provide a bumper that is structurally simple and is also low cost.

This aim, as well as these and other objects which will become better evident hereinafter, are achieved by a bumper for vehicles, characterized in that it is constituted by a hollow tubular frame, which can be closed laterally by means of adapted caps and which has, in an upper region and longitudinally, an open cavity, which defines a seat for wires, and can be closed by means of a plurality of covers, a support protruding from one or more of said covers for a light and/or a registration plate and/or a tail-light.

Further characteristics and advantages of the invention will become better apparent from the detailed description of a particular, but not exclusive, embodiment, illustrated by way of non-limiting example in the accompanying drawings wherein:

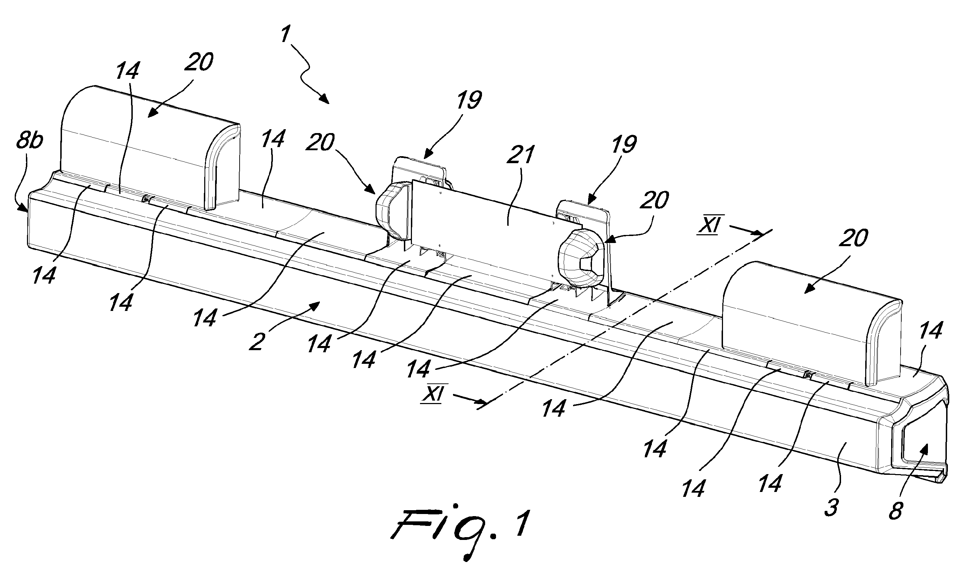

Figure 1 is a perspective view of the bumper of the invention from the front;

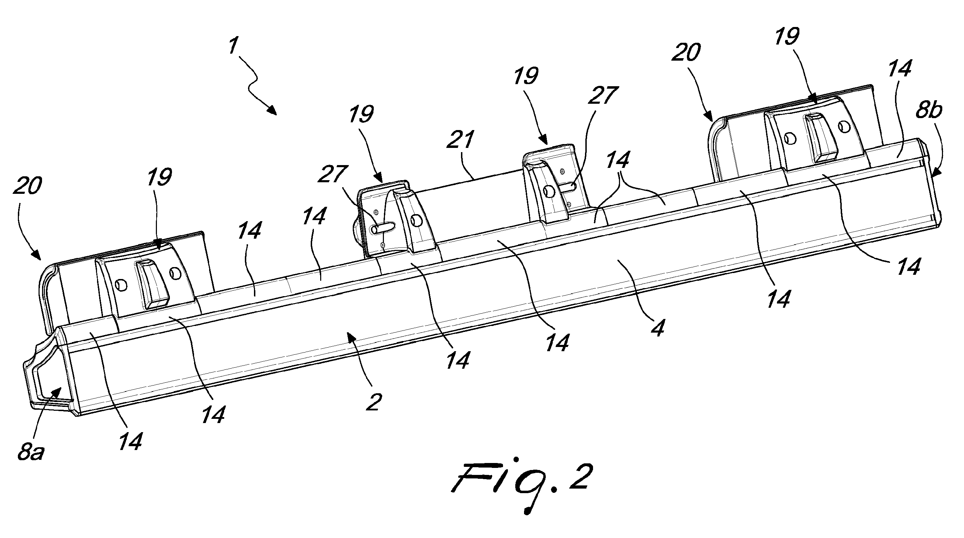

Figure 2 is a perspective view of the bumper from the rear;

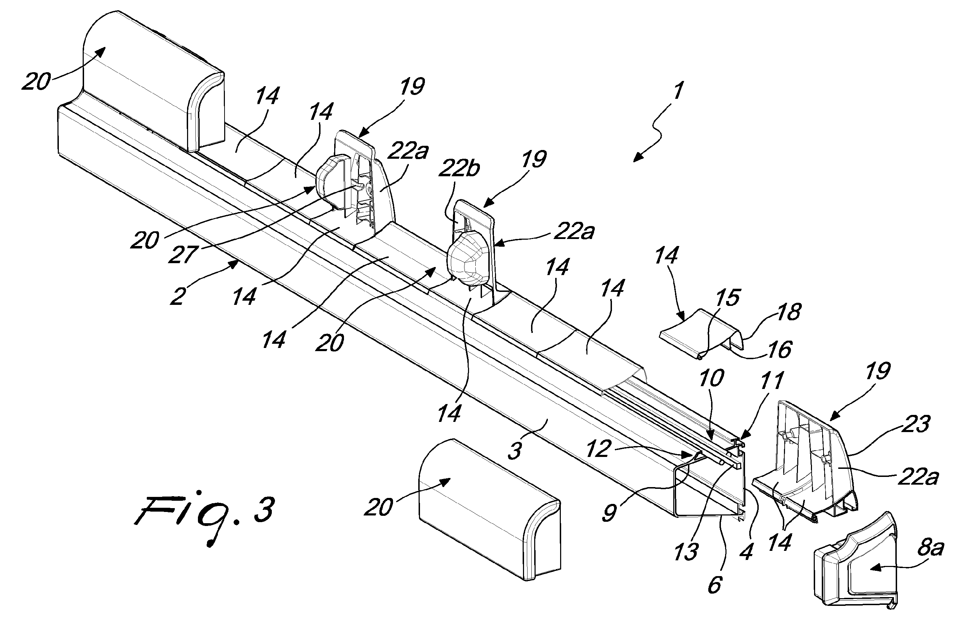

Figure 3 is a partially exploded view of the bumper;

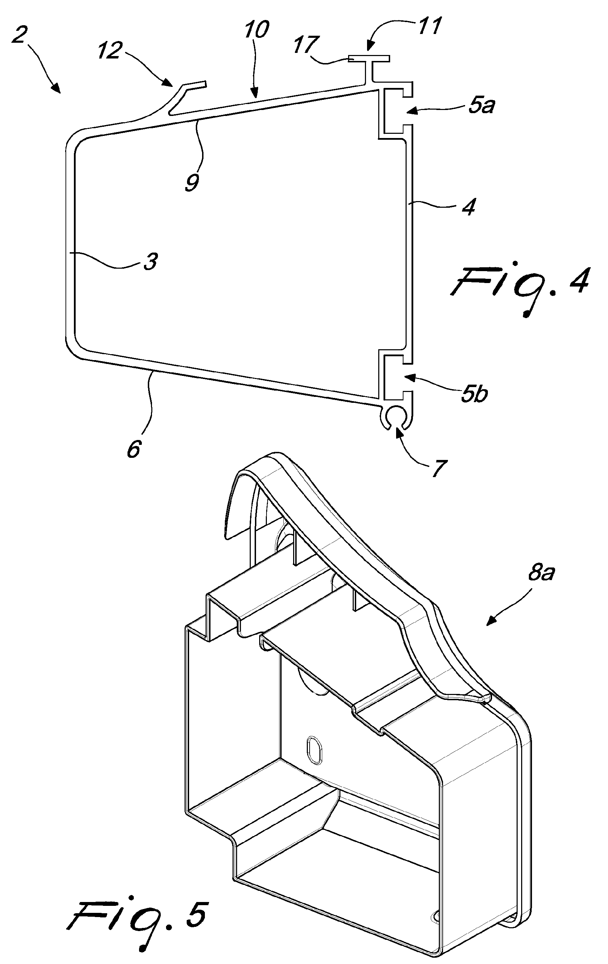

Figure 4 is a sectional view of the hollow tubular frame;

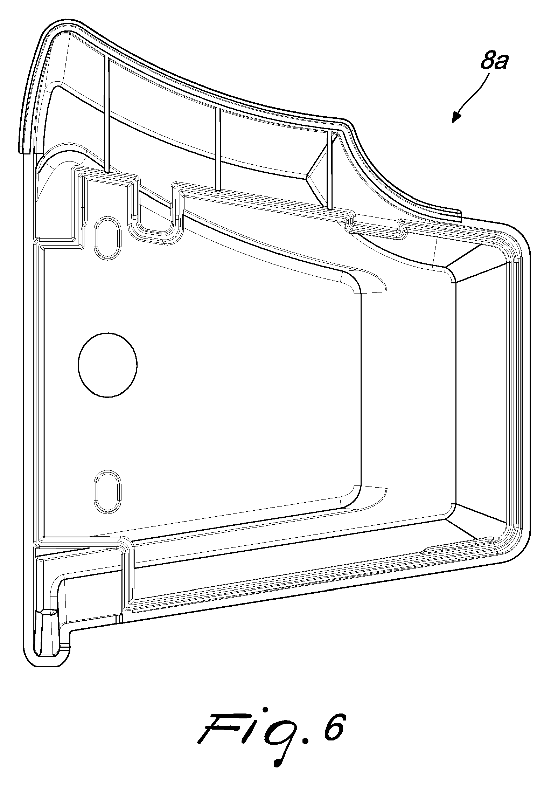

Figures 5 and 6 are two views of one of the caps;

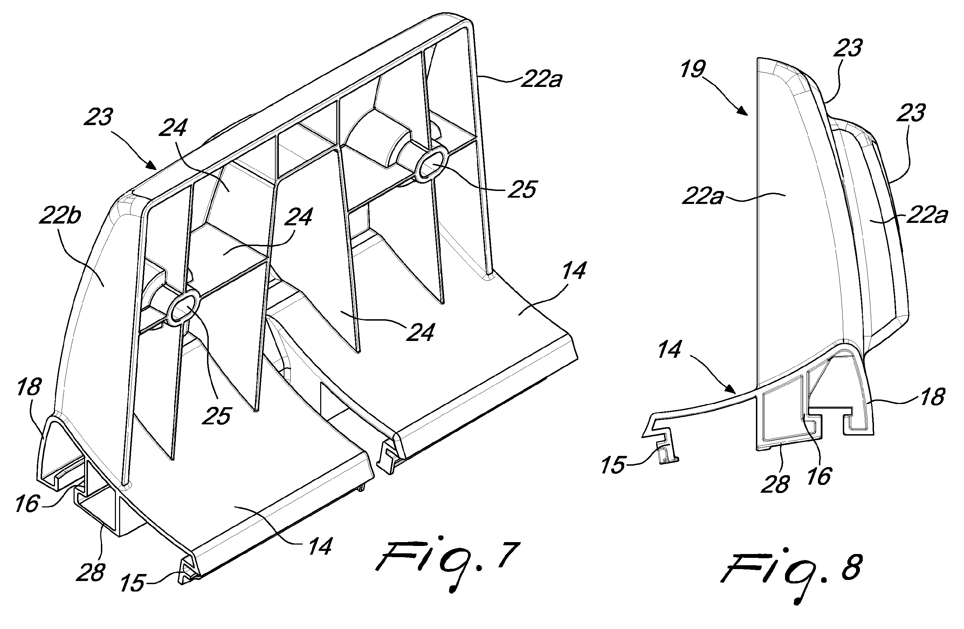

Figure 7 is a perspective view of one of the supports from the rear;
Figure 8 is a side view of the support in the previous figure;

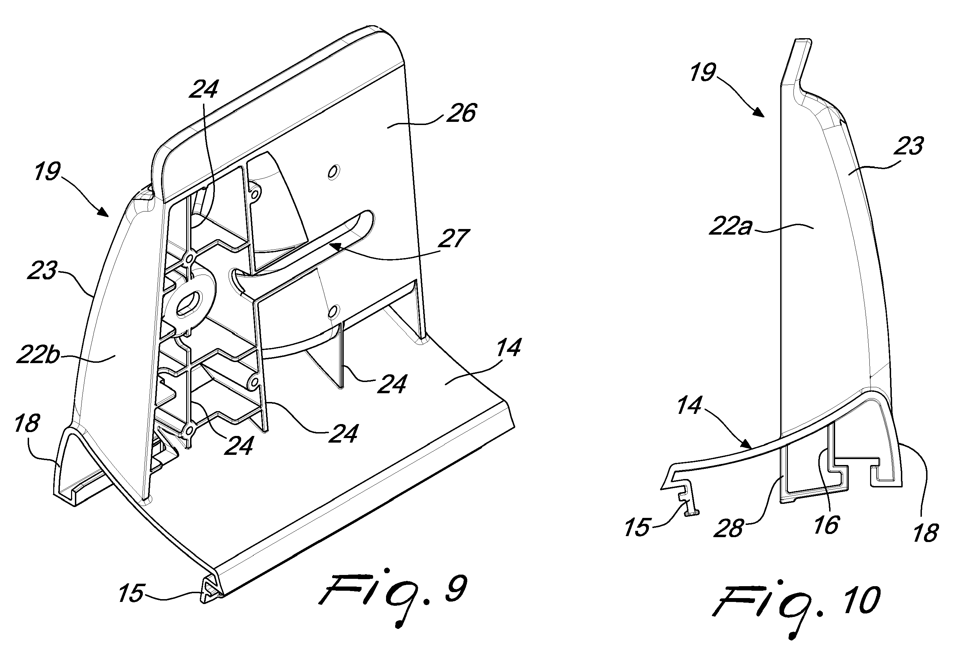

Figure 9 is a view of a second type of support, in a view similar to that of Figure 7;
Figure 10 is a side view of the support in the previous figure;

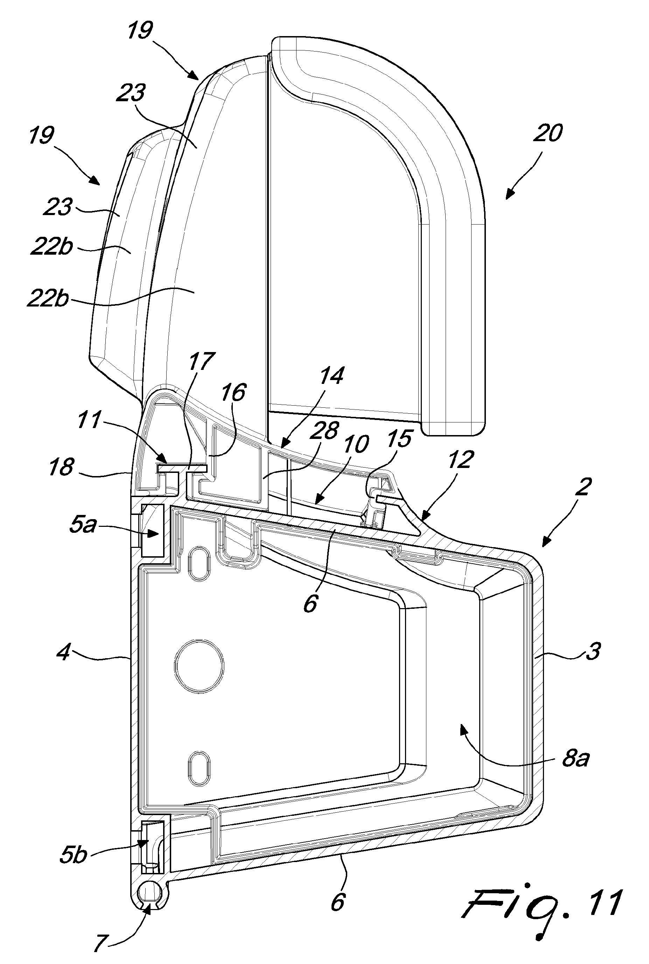

Figure 11 is a sectional view taken along the line XI-XI in Figure 1.

In the embodiments that follow, individual characteristics shown in relation to specific examples may in reality be interchanged with other, different characteristics, existing in other embodiments.

With reference to the figures, the reference numeral 1 designates a bumper for vehicles, that is illustrated, only for description purposes, as a rear bumper.

The bumper 1 is constituted by a frame 2, which is tubular and hollow, and which is preferably constituted by an extruded profile in light alloy exhibiting a shape, in cross-section, that is basically box-like, and preferably having the shape of an isosceles trapezoid.

The frame 2 thus has a first front wall 3 that is smooth and a second rear wall 4 at the ends of which are defined, along a longitudinal axis of the frame 2, first guides 5a, 5b which constitute means for anchoring and/or fixing the frame 2 to the vehicle by way of known means.

Below the first guide 5b, arranged under the frame 2, a second guide 7 is provided, which acts as a connector to a third lower wall 6 of the frame 2 and is adapted to allow the mounting and/or fixing of a splash guard strip, preferably made of rubberlike material, which is aimed at stopping debris thrown up by the rear wheels of the vehicle.

The frame 2 has its lateral ends open, which can therefore be closed by means of adapted caps 8a, 8b.

At least one cavity 10 is obtained, outside the frame 2, at a fourth upper wall 9, the cavity 10 longitudinally affecting the frame 2 and being defined by the presence of a third rear guide 11 and a fourth front guide 12 which are respectively T-shaped and L-shaped.

The third and the fourth guide 11, 12 protrude slightly beyond the fourth upper wall 9, thus thereon defining a seat for example for adapted wires 13 for powering various different devices.

The cavity 10 is temporarily and, selectively for part of its length, closeable by means of a plurality of covers 14, each one of which is constituted by a variously shaped profile which has at one end a first appendage 15, which is shaped so as to complement the fourth front guide 12, and, in an intermediate region, a second appendage 16, which is adapted to interlock at one flange 17 of the third rear guide 11.

A third rear appendage 18 is also provided, which is connected to the underlying frame 2 in a region that is arranged above the first guide 5a.

The coupling of the covers 14 to the frame 2 occurs by means of a sliding coupling, or, preferably, by means of a snap-acting interconnection, which allows the simple inspection of the desired section of the bumper structure.

If the coupling is a snap-acting interconnection, then following the positioning of the first appendage 15 at the fourth front guide 12, the snap-fit coupling of the second appendage 16, which has a suitable undercut, is forced on the flange 17.

Covers 14 are also provided, from which a support 19 protrudes for a light and/or a tail-light 20 and/or a registration plate 21.

The support 19 can protrude from a single cover 14 or from a pair of covers arranged side by side or from a cover 14 that has the right length upon which to rest the desired support 19.

The support 19 thus has a dimension, either in width or in depth or in height, which can vary according to the specific device which is associated with it.

Each support thus has a pair of fifth lateral walls 22a, 22b which are connected by a sixth rear wall 23.

Each support 19 thus has a box-like structure that is open in the direction of the first front wall 3 of the frame 2, each support 19 comprising adapted ribs or protrusions 24 which are provided with fixing means 25 for accessories, such as a tail-light, or a light or a flat surface 26, suitably perforated for the interconnection of a registration plate or of other accessories.

The presence of the ribs 24 moreover defines adapted seats for further components such as for example the electrical connector that is located in the rear part of the tail-light.

Advantageously a slot or groove 27 is also provided in at least one support 19, specifically in the support 9 that has the flat surface 26, so as to allow the accommodation for example of the electrical wire of a tail-light or the like for its routing to the underlying cavity 10.

In one or more of the covers 14 there can be a fourth appendage 28, which is essentially L-shaped and protrudes downward in an intermediate region between the first appendage 15 and the second appendage 16 and is connected to the second appendage 16; the function of the fourth appendage 28 is to increase the stability of the overlying support 19.

In practice it has been found that the invention fully achieves the intended aim and objects, a bumper for vehicles being provided which is simple to implement and in the assembly of the different components so as to obtain a desired conformation according to the specific requirements and models to be obtained, all by simply making a choice of the number and of the position of the various different components to be mounted on the frame.

The bumper that is obtained further meets the regulations in force regarding structural rigidity while maintaining a high overall lightness.

The bumper further makes it possible to achieve the total integration of the functions of accommodating the accessories, accommodating and handling the wiring, and protecting both the accessories and the wiring.

Finally, the bumper has a great flexibility of configuration for the wiring and the positioning of the accessories according to the requirements of different markets, such configuration being obtainable in the absence of specific drilling or machining operations, it being moreover possible to achieve, rapidly and simply, the customization of the bumper according to specific requirements.

Obviously the invention, thus conceived, is susceptible of numerous modifications and variations, all of which are within the scope of the appended claims.

Obviously the materials used as well as the dimensions constituting the individual components of the invention can be more relevant according to specific requirements.

The various different means for performing certain different functions shall not in any way coexist only in the illustrated embodiment, but may be present per se in many embodiments, even if not illustrated.

The characteristics indicated as advantageous, advisable or similar, may also be missing or be substituted by equivalent characteristics.

The disclosures in Italian Utility Model Application No. TV2010U000043 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bumper (1) for vehicles, **characterized in that** it is constituted by a hollow tubular frame (2), which can be closed laterally by means of caps (8a, 8b) and which has, in an upper region and longitudinally, at least one open cavity (10), which defines a seat for wires, and can be closed by means of a plurality of covers (14), a support (19) protruding from one or more of said covers (14) for a light and/or a registration plate and/or a tail-light.

2. The bumper according to claim 1, **characterized in that** said hollow tubular frame (2) is preferably constituted by an extruded profile in light alloy which has a box-like shape and in cross-section has a shape that is an isosceles trapezoid, said frame (2) having a first front wall (3) that is smooth and a second rear wall (4) at the ends of which , along a longitudinal axis of said frame (2), first guides (5a, 5b) are defined, which constitute means for anchoring and/or fixing said frame (2) to the vehicle.

3. The bumper according to claims 1 and 2, **characterized in that** below said first guide (5b), arranged under said frame (2), a second guide (7) is provided , which acts as a connector to a third lower wall (6) of said frame (2) and which is adapted to allow the mounting and/or fixing of a splash guard strip aimed at stopping debris thrown up by the rear wheels of the vehicle.

4. The bumper according to claims 1 and 2, **characterized in that** said frame (2) has the lateral ends open, which can be closed by means of caps (8a, 8b).

5. The bumper according to claims 1 and 2, **characterized in that** at least one cavity (10) is obtained on the outside of a fourth upper wall (9) of said frame (2), said at least one cavity (10) longitudinally affecting said frame (2) and being defined by the presence of a third rear guide (11) and a fourth front guide (12) which are respectively T-shaped and L-shaped.

6. The bumper according to claims 1 and 5, **characterized in that** said third and fourth guides (11, 12) protrude slightly beyond said fourth upper wall (9), thereon defining a seat for adapted wires (13) for powering various different devices.

7. The bumper according to claims 1 and 6, **characterized in that** said cavity (10) is temporarily and, selectively for part of its length, closeable by means of a plurality of covers (14).

8. The bumper according to claims 1 and 7 **characterized in that** each one of said covers (14) is constituted by a variously shaped profile which has at one end a first appendage (15), which is shaped so as to complement said fourth front guide (12), and, in an intermediate region, at least one second appendage (16), which is adapted to be connected so that it can slide or interlock at one flange (17) of said third rear guide (11).

9. The bumper according to one or more of the preceding claims, **characterized in that** it comprises a third rear appendage (18) which is connected to said, underlying, frame (2) in a region that is arranged above said first guide (5a).

10. The bumper according to one or more of the preceding claims, **characterized in that** the coupling of said covers (14) to said frame (2) occurs by means of a sliding coupling.

11. The bumper according to one or more of the preceding claims, **characterized in that** the coupling of said covers (14) to said frame (2) occurs by means of a snap-acting interconnection, which allows the simple inspection of the desired section of the bumper structure.

12. The bumper according to claims 1 and 11 **characterized in that**, following the positioning of said first appendage (15) at said fourth front guide (12), the snap-fit coupling of said second appendage (16), which has a suitable undercut, is forced on said flange (17).

13. The bumper according to one or more of the preceding claims, **characterized in that** from one or more of said covers (14) a support (19) protrudes for a light and/or a tail-light (20) and/or a registration plate (21).

14. The bumper according to claims 1 and 13, **characterized in that** said support (19) protrudes from a single cover (14) or from a pair of covers (14) arranged side by side or from a cover (14) that has the right length upon which to rest the desired support (19).

15. The bumper according to claims 1 and 14, **characterized in that** said support (19) has a dimension, either in width or in depth or in height, which can vary according to the specific device which is associated with it.

16. The bumper according to claims 1 and 14, **characterized in that** each one of said supports (19) has a pair of fifth lateral walls (22a, 22b) which are connected by a sixth rear wall (23), each one of said supports (19) having a box-like structure that is open in the direction of said first front wall (3) of said frame (2).

17. The bumper according to one or more of the preceding claims, **characterized in that** each one of said supports (19) comprise adapted ribs or protrusions (24) which are provided with fixing means (25) for accessories, such as a tail-light, or a light or a flat surface (26), suitably perforated for the interconnection of a registration plate or of other accessories, said ribs (24) defining adapted seats for further components such as the electrical connector that is located in the rear part of the tail-light.

18. The bumper according to one or more of the preceding claims, **characterized in that** at least one of said supports (19) comprises a slot or groove (27) that is adapted to allow the accommodation of the electrical wire of a tail-light or the like for its routing to the underlying cavity (10).

19. The bumper according to one or more of the preceding claims, **characterized in that** in one or more of said covers (14) a fourth appendage (28) is provided, which is essentially L-shaped and protrudes downward in an intermediate region between said first appendage (15) and second appendage (16) and is connected to said second appendage (16), said fourth appendage (28) thus increasing the stability of said, overlying, support (19).
